# EUROPEAN PATENT SPECIFICATION

(11) **EP 1 628 854 B1**
(45) Date of publication and mention of the grant of the patent: **07.11.2012**
(21) Application number: 04748625.3
(22) Date of filing: 02.06.2004
(51) Int. Cl.: B60P 1/02

(54) **WHEEL SUSPENSION AND VEHICLE**
RADAUFHÄNGUNG FÜR FAHRZEUGE
SUSPENSION DE ROUE ET VEHICULE

(30) Priority: 03.06.2003 NL 1023584; 28.04.2004 NL 1026066
(43) Date of publication of application: 01.03.2006
(73) Proprietor: Van Gemert Mobile Systems B.V., 5692 EB SON (NL)
(72) Inventor: VAN GEMERT, Coenraad, Gerard, 5671 CR Nuenen (NL)
(74) Representative: Dorna, Peter
(86) International application number: PCT/NL2004/000393
(87) International publication number: WO 2004/106110

(56) References cited:
- EP-A- 0 931 684
- EP-A1- 0 444 735
- CH-A- 179 299
- DE-A- 4 037 191
- DE-A- 19 754 425
- US-A- 5 618 151

## Description

The present invention relates to a vehicle provided with a wheel suspension comprising a frame which can be mounted to a remaining part of a vehicle, being pivotable with respect thereto against spring pressure generated by spring means, a wheel comprising a rim, which is rotatable about an axis of rotation with respect to the frame, and brake means for braking the rotation of the wheel.

Such a wheels suspension is known from Dutch laid-open publication No. 9000452 (EP 444 735 A1), which describes a modular transport vehicle. Said modular transport vehicle essentially consists of a first module for controlling and driving the vehicle on the one hand, which first module comprises a steering mechanism, a driving motor and a pair of front wheels steered by the steering mechanism and driven by the driving motor, and a second module for accommodating goods and/or persons on the other hand, which second module comprises a load compartment and at least one pair of rear wheels. The first module and the second module each comprise a coupling surface, which coupling surfaces are interconnected in a semi-permanent, rigid mode. The pair of rear wheels of the second module form part of a pair of independent wheel modules, which are each accommodated in side walls of the second module. Each wheel module comprises spring bellows and shock absorbers besides the rear wheels in question and the associated rear axles. It is indicated as an option in said document that it is possible to lower the second module as a whole, if desired, by using pneumatic spring bellows, but it remains unclear how said lowering independently of the first module would be possible, considering the rigid connection between the first module and the second module. According to NL 9000452 the advantage of such a transport vehicle is the fact that it is possible to substitute a module for another module without having to replace the entire vehicle. One limitation of the transport vehicle according to the prior art as described above is the fact that the first module comprises driving means at the front side of the vehicle as well as the front wheels driven by said driving means, as a result of which the number of possible embodiments available for the first module at the front side is limited, and it is not possible to use a rear-wheel driven vehicle with a front engine as a basis for the first module, for example. This limitation constitutes a very serious problem, in particular in the case of higher load capacities upwards of about 2 tonnes.

The object of the present invention is to provide a solution as regards the limitations of the prior art, to which end the vehicle is defined according to claim 1. When the wheel suspension itself is fitted with driving means and transmission means it is not necessary to use front-wheel drive, whilst in addition it is not necessary to provide a (mechanical) transmission extending from the front side of a vehicle, where normally a combustion engine is mounted, to the rear wheels, in spite of the fact that rear-wheel drive is used. The saving in space that is achieved in this way can be utilized entirely for increasing the capacity of a load compartment at the rear side of the vehicle, and in addition the lowering of such a load compartment is not restricted or rendered impossible by the presence of such transmission means.

The driving means comprise an electric motor, which, because of its compact dimensions, is very suitable for forming part of the wheel suspension without occupying a great deal of space. The electric power for the electric motor may be generated elsewhere in the vehicle, for example near the cabin, since the required electric energy transfer can take place via an electric cable which takes up relatively little space. Preferably, the electric motor is a permanent-magnet motor.

The vehicle comprises a load compartment provided with a loading floor, which load compartment can be moved upwards and downwards between a lower position and an upper position, at least when the vehicle is stationary, by suitably controlling the spring means, in which lower position the loading floor rests on a supporting surface for the vehicle. It is precisely with vehicles that are constructed in this manner that the advantages of the wheel suspension that forms part of such a vehicle are greatest, since there is no need for the presence under the loading floor of components that might interfere with the placing of the load compartment provided with the loading floor on the supporting surface on which the vehicle rests.

Preferably, the frame comprises a cylindrical portion within which the driving means are at least partially accommodated. Said cylindrical portion thus forms a very suitable guard for the driving means, with the cylindrical shape nicely fitting in with the shape of a wheel.

The cylindrical portion preferably extends partially within the rim, as this enables a compact construction of the wheel suspension.

To obtain a simpler construction of the transmission means, it is furthermore preferable for the driving means to comprise an outgoing shaft which coincides with the axis of rotation of the wheel.

Furthermore preferably, the brake means are positioned mainly between the transmission means and the driving means. This preferred embodiment provides additional possibilities of achieving a very compact construction of the wheel suspension, in which also the brake disk forming part of the brake means is disposed within the rim, for example.

A very advantageous embodiment of the wheel suspension is obtained if the transmission means comprise a planetary system. A planetary system is very suitable for effecting a suitable transmission ratio between the rotational speed of the driving means and the rotational speed of the wheels, and in addition such a planetary system can be incorporated in the wheel suspension in a compact manner.

Likewise with a view to achieving a compact construction, the brake means are preferably hydraulically actuated.

The invention also relates to a vehicle comprising a wheel suspension according to the invention as described above.

The invention further relates to a method for unloading a load compartment provided with a loading floor of a self-propelling vehicle fitted with wheels, comprising the steps of:
- driving the self-propelling vehicle loaded with cargo to a destination;
- unloading the self-propelling vehicle at said destination.

Such a method is well-known, it is for example used in supplying shops in inner cities. The last few years the rules imposed by authorities with regard to traffic, more in particular truck traffic, in inner cities have become increasingly stringent, in particular as regards environmental aspects such as air pollution and noise nuisance. In addition to that, the unloading of a load compartment of a self-propelling vehicle takes up a relatively great deal of time in practice, which is disadvantageous not only for economic reasons, but which may also interfere with the flow of traffic, in particular in inner cities, which may even lead to the safety of road-users being at risk. Illustrative in this regard is e.g. the unloading of a truck loaded with roll containers. After the truck has arrived at its destination, a tailboard present at the rear side of the vehicle is pivoted down 90° to a horizontal position, forming a load platform for a limited number of roll containers. Once said load platform is filled with roll containers, a lift system is activated and the load platform is lowered over a distance of about one metre, after which the roll containers are moved off the platform for further local handling. Subsequently, the load platform is moved up again until the load platform is positioned at the same level as the floor of the load compartment, after which the cycle may be repeated again. It will be apparent that this is a time-consuming manner of working.

The object of the invention is to provide, whether or not in preferred embodiments thereof, a method as referred to in the introduction, by means of which it is in principle possible to realise a significant improvement as regards the drawbacks of the prior art as described above. To that end, the method according to the invention is characterized by the step of lowering the load compartment from an upper position to a lower position so as to make it possible to unload the "self-propelling vehicle, in which lower position the underside of the loading floor of the load compartment, is mainly supported on the supporting surface for the wheels of the self-propelling vehicle. By lowering the load compartment until the underside of the loading floor of the load compartment is mainly supported on the supporting surface for the wheels of the self-propelling vehicle, unique possibilities for unloading (and also for loading) the vehicle are created, so that said unloading can take place much more easily and quickly, which has significant advantages from a viewpoint of the -envi-ronment and traffic safety as well as from an economic viewpoint. In the case of roll containers, for example, it thus becomes possible to roll said containers directly out of the load compartment in the lower position thereof, which can take place not only at the rear side of the load compartment, but in principle also at the two sides of the load compartment, so that the unloading (and also the loading) of the load compartment can take place much more quickly. In addition, less attention needs to be paid to the order in which the load compartment is filled when loading of the load compartment, since it was necessary in the prior art to load the cargo that was to be unloaded last (for example because the cargo was to be transported to different destinations) into the load compartment first.

Another object of the invention is to provide a self-propelling vehicle which is suitable for use with a method according to the invention as described above. In this connection a self-propelling vehicle comprising a chassis with a frame, rear wheels and front wheels may be considered, which frame also comprises a load compartment provided with a loading floor, said vehicle further comprising driving means for driving at least some of the wheels, spring means being operative between the wheels and the frame and adjusting means for adjusting the height of the load compartment. Such a self-propelling vehicle is well-known in several embodiments thereof, in the first place in the form of a truck, but also in the form of a so-called "kneel bus". The so-called "kneeling" of such a bus takes place by suitably controlling the pneumatic suspension system of the bus, on average effecting a kneel stroke of 150 mm. The kneeling of the bus makes it easier for passengers to get in and out, which is in particular advantageous for older and less mobile passengers. It is important to note in this connection that even in the kneeled position of a kneel bus a certain gap will at all times remain between the road surface and the underside of the compartment in which the passengers and the driver are present. Said compartment does not rest on the road surface in the kneeled position, therefore.

The vehicle according, to the invention is characterized in that the distance between the upper side of the loading floor and the underside of the loading floor is maximally 15 cm, more preferably maximally 10 cm, which renders the self-propelling vehicle very suitable for use with the method according to the invention as described above. It is precisely the relatively small distance between the upper side of the loading floor and the underside of the loading floor (or, in other words, the thickness of the loading floor of the load compartment) that facilitates the loading and unloading of the load compartment, in particular if the cargo consists of roll containers, which is often the case in particular in inner cities. Especially when the load compartment is unloaded near a curb, the height of said curb will in practice correspond to the thickness of the loading floor of the load compartment to a significant extent, as a result of which the upper side of the loading floor will be positioned at the same vertical level as the adjacent pavement during unloading/loading.

Precisely with a view to maximising the unloading possibilities, so that unloading (and also loading) can take place as quickly as possible, the load compartment is preferably provided with an unloading board on the long side of the self-propelling vehicle, which unloading board can pivot about a pivot axis that extends near the loading floor, parallel to the direction of movement of the self-propelling vehicle. It will be understood that the length of such an unloading board, seen in a direction perpendicular to the pivot axis, may be very limited in comparison with the length of the pivoted loading boards used at the rear side of trucks according to the prior art, as already describe above. After all, the main function of the unloading board according to the present preferred embodiment is merely to bridge a limited difference in height, if present, and a gap that may be present between the other side of the loading floor and the adjacent supporting surface. Consequently, the length of the unloading board, seen in a direction perpendicular to the pivot axis, may be limited to less than one metre or less than 60 cm or even less than 40 cm.

Preferably, the rear wheels have a divided rear axle, which makes it possible to create a loading floor area that continues from the front side of the rear wheels to the rear side of the rear wheels, whilst said loading floor is nevertheless positioned at a lower level than the central axis of the rear wheels, even in the upper position of the load compartment.

Preferably, the driving means comprise individual motors for each of the rear wheels. The fact is that this makes it possible to base the design of the self-propelling vehicle according to the invention on a standard truck with rear-wheel drive, the rear side of which truck, including the rear wheels mounted on an undivided axle, is not used with the self-propelling vehicle according to the invention, but substituted for other components.

For environmental reasons it is preferable if said motors are electric motors.

Furthermore it is preferable for the self-propelling vehicle to comprise a generator for electrically charging a battery that feeds the electric motors. It is for example conceivable in this connection for said generator to operate only at those locations where it causes the least nuisance.

Alternatively it is conceivable to use hydraulic motors, which are directly energized by a combustion engine disposed at the front of the self-propelling vehicle, for example.

In order to make it possible to move the load compartment from the upper position to the lower position (and vice versa, of course), the adjusting means preferably comprise control means for controlling the operation of the spring means. Thus the desired vertical movement of the load compartment can be realised by suitably controlling the operation of the spring means via the control means.

In a greatly preferred embodiment, the vehicle comprises a driver's cabin which can be jointly moved up and down with the load compartment under the influence of the operation of the spring means. This obviates the need to provide guide means for facilitating a relative movement between the load compartment and the driver's cabin.

For reasons of constructional simplicity, the vehicle is preferably rigidly connected to the driver's cabin.

The invention will now be explained in more detail in the description of a preferred embodiment of a vehicle comprising a wheel suspension according to the invention, in which reference is made to the following figures:
Fig. 1 is a side elevation of a self-propelling vehicle according to the invention, showing the vehicle in an upper position thereof;
Fig. 2 is a side elevation of a self-propelling vehicle according to the invention, showing the vehicle in a lower position thereof;
Fig. 3 is a cross-sectional view along the line III-III in Fig. 1;
Fig. 4 is a cross-sectional view along the line IV-IV in Fig. 2;
Fig. 5 is a perspective view of the wheel suspension of the vehicle that is shown in Figs. 1-4;
Fig. 6 is a top plan view of the wheel suspension that is shown in Fig. 5;
Fig. 7 is a side elevation of a vehicle according to the invention comprising a wheel suspension according to the invention;
Fig. 8 is a perspective rear view of the wheel suspension from the outer side, including the wheel housing that is shown in the boxed section in Fig. 7 and indicated at VIII, IX therein;
Fi-g. 9 -is a perspective rear view of the wheel suspension from the inner side of the vehicle, without the wheel housing;
Fig. 10 is a vertical cross-sectional view of the wheel suspension along the line X-X in Fig. 7;
Fig. 11 is a sectional view of the planetary system along the line XI-XI in Fig. 10.

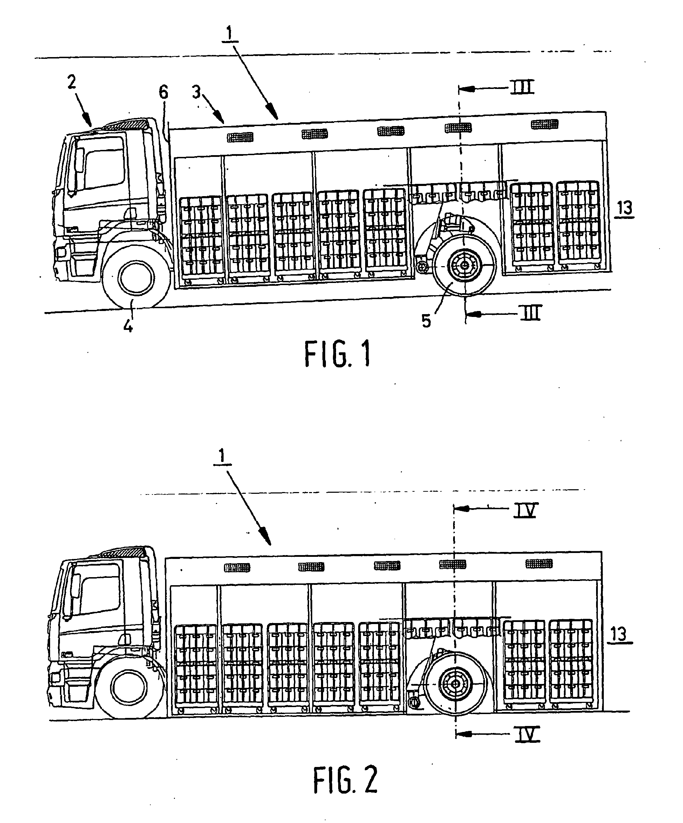

The truck 1 according to Figs. 1-4 comprises a cabin 2 for a driver and a load compartment 3 which is rigidly connected thereto. Positioned below the cabin 2 are steerable front wheels 4, with rear wheels 5 being provided at the rear half of the load compartment 3. The cabin 2 and the front wheels 4 originally formed part of a standard truck comprising two chassis beams extending from the rear side of the cabin, on which on the one hand a load compartment could be placed and to which on the other hand the wheel suspension was mounted. Said rearwardly extending chassis beams have been cut through a short distance behind the rear side of the cabin 2, however. The stumps thus formed are rigidly attached to the front side 6 of the load compartment 3, for example by means of welded joints.

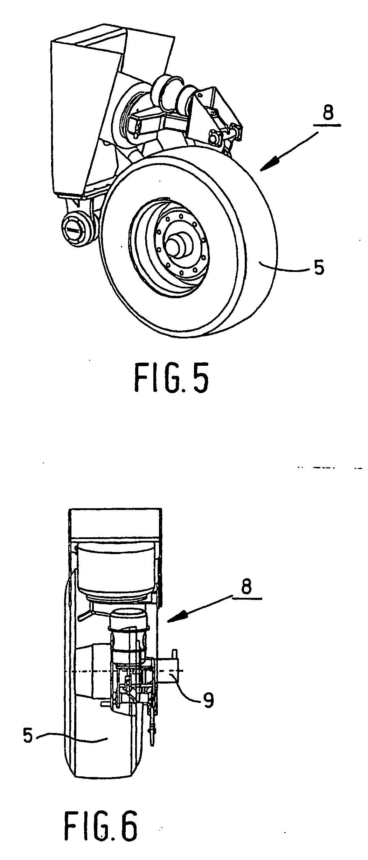

The load compartment 3 is fully rectangular in shape, with the exception of the wheel housings 7 at the rear wheels 5. It is noted in this connection that the rear wheels 5 have a completely independent wheel suspension 8 (see Figs. 5 and 6) with a divided rear axle 9. In the present embodiment, the wheel suspension 8 is an independent wheel suspension system comprising a spring arm, to the end of which the wheel in question is rotatably mounted. A special aspect is the fact that the rear wheels 5 are individually driven by a hydraulic motor 9, which is hydraulically fed by means of a diesel engine disposed below the cabin space 2.

Alternatively, the hydraulic motor 9 might be substituted for an electric motor disposed within the hub of each rear wheel 5. Such electric motors might be fed by means of a battery system accommodated within the load compartment 3 above- the wheel housings 7. Th i s part of the load compartment is quite suitable for that purpose, on the one hand because it is located close to the electric motor, whilst on the other hand this part of the load compartment 3 will generally be less suitable for accommodating cargo in the load compartment 3. Such a battery system may in turn be fed by a diesel generator disposed below the cabin 2. In use it is conceivable in this connection for the generator to operate only at locations where it causes the least nuisance, for example explicitly not in inner cities.

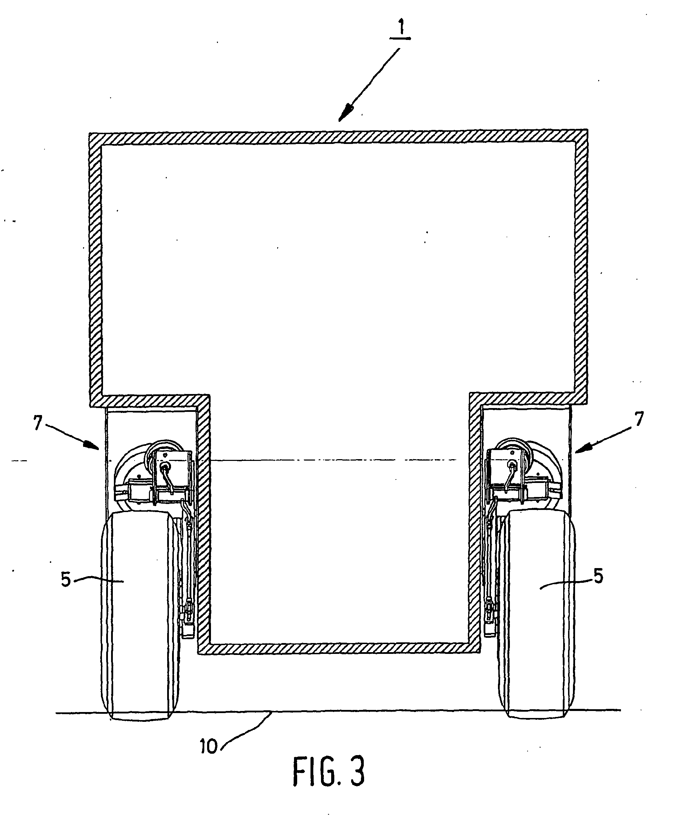

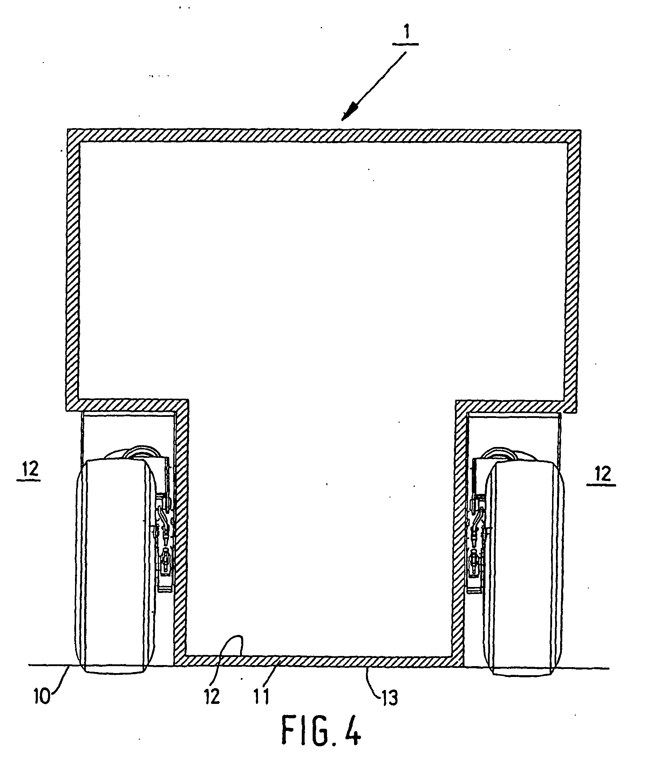

As is apparent from a comparison between Figs. 1 and 3 on the one hand, which show the truck 1 in an upper position thereof, in which position movement of the truck 1 is possible, and Figs. 2 and 4 on the other hand, which show the truck 1 in a lower position, which position is unsuitable for moving the truck 1 but which is quite suitable for loading or unloading the load compartment 3 of the truck 1, the load compartment 3 can be lowered (together with the cabin 2) to a level at which the load compartment 3 rests on the supporting surface 10. Movement between the upper position as shown in Figs. 1 and 3 and the lower position as shown in Figs. 2 and 4 is effected by means of a control system, which suitably controls the pneumatic suspension system present both at the front wheels 4 and at the rear wheels 5. Such a control system is already known per se to those skilled in the art, for example from the so-called "kneel buses", but so far the load compartment has never been lowered to such a level that it rests on a supporting surface 10, as is indeed the case with the present invention. Loading and unloading of the load compartment 3 is thus considerably facilitated, in which connection it is noted that the loading floor 11 having an upper side 12 and an underside 13 only has a thickness of about 8 cm. In addition to that, pivoted boards (not shown in the figures) are provided at the sides 12 and at the rear 13. Said boards have a pivot axis which extends at the circumferential edge of the loading floor 11, so that said pivot axes extend parallel to the direction if movement of the truck 1 at the sides 12 and perpendicularly to said direction of movement at the rear 13, all pivot axes having a horizontal orientation. Logically, no boards are provided at the location of the rear wheels 5. In the upper position of the truck 1 as shown in Figs. 1 and 3, the boards are in their upwardly pivoted position, so that they extend vertically, whilst in the lower position as shown in Figs. 2 and 4 the boards are in their downwardly pivoted position, so that they can serve as a bridge between the load compartment 3 and the area surrounding the load compartment 3. Curbs can thus be bridged without any difficulty, for example, and limited differences in height can easily be overcome. The length of the boards, measured from the pivot axes, is about 30 cm. Disposed above the boards in the upwardly pivoted position thereof are roll-down shutters (not shown). Alternatively a rolling grille might be used.

As is shown in particular in Figs. 1 and 2, the truck 1 is loaded with roll containers, which, thanks to the invention, can be quickly removed from the load compartment 3 or be loaded into the load compartment 3. Although the advantages of the invention appear in particular when using such roll containers, the invention is also advantageous when using other types of cargo, such as pallets, which can be easily loaded and unloaded by means of a hand truck, for example.

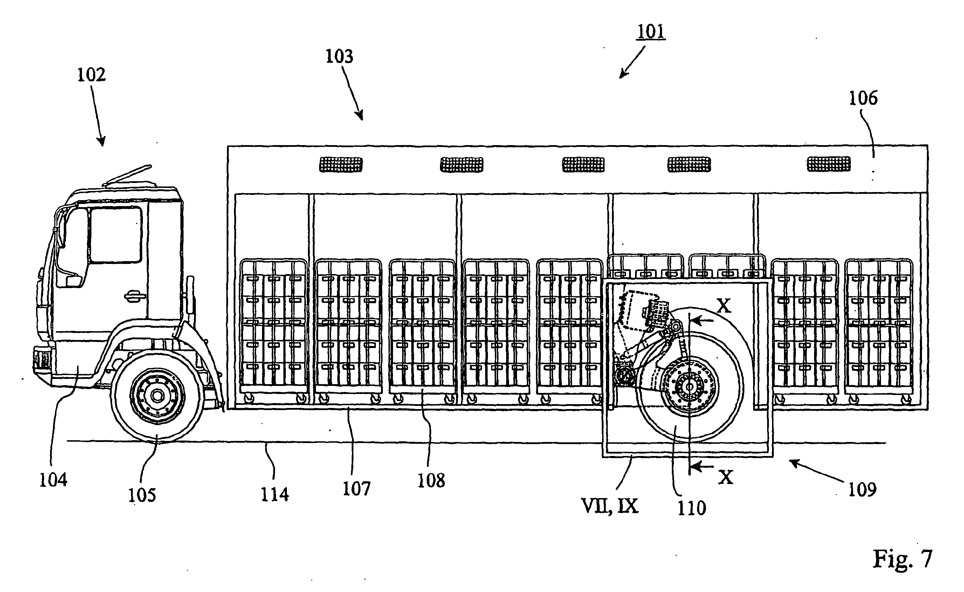

Fig. 7 shows a truck 101 which is in large measure comparable to the truck 1 as shown in Figs. 1-4 and which consists of a cabin part 102 and a cargo part 103. The cabin part 102 comprises a cabin 104 for a driver of the truck 101 and steerable front wheels 105. The cabin part 102 further comprises a diesel engine, which charges a battery electrically. The cabin part 102 is in fact a standard tractor for a tractor-trailer combination, from which the larger part of the longitudinal beams that extend behind the cabin of the standard tractor, including the associated driven rear wheels and the mechanical transmission from the diesel engine to the rear wheels, have been removed. The cargo part 103 is rigidly connected to the stumps of the longitudinal beams that remain by means of welded joints, so that the cabin part 102 and the cargo part 103 form one rigid unit.

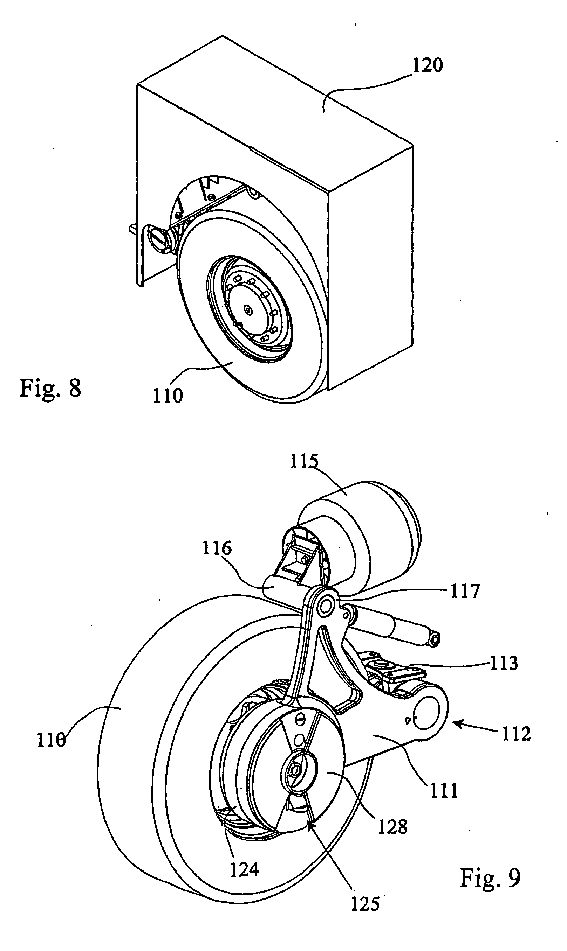

The cargo part 103 comprises a load compartment 106 having a flat loading floor 107, on which the cargo in the load compartment 106, in this case consisting of roll containers 108, are supported. Near the rear side of the load compartment 106, recesses are present in the load compartment on either longitudinal side thereof, which recesses function to accommodate an independent wheel suspension 109 as shown inter alia in Fig. 8. Each wheel suspension 109 comprises a rear wheel 110. The rear wheel 110 is rotatably mounted in the rear corner 125 of a substantially triangular suspension arm 111 (see in particular Fig. 9), which extends on the inner side of the rear wheel 110. The suspension arm 111 is connected to the cargo part 103 via the front corner 112 thereof, where pivoting means 113 are provided for enabling limited pivoting movement of the suspension arm 111 about a pivot pin which extends through the front corner 112, parallel to the axis of rotation of the rear wheel 110. Such pivoting is necessary in order to enable springing of the load compartment while the truck 101 is driving. In addition to that, said pivoting movement makes it possible to lower the load compartment 106 with the loading floor 107 onto the supporting surface 114 for the truck 101, as will be explained in more detail yet, so that the roll containers 108 can be easily rolled out of the load compartment 106. In order to enable springing of the cargo part 103, each rear wheel suspension 109 is provided with a pneumatic bellows 115, which on one side acts on a bar 116 which extends through the upper angle 117 of the suspension arm 111, parallel to the axis of rotation of the rear wheel 110, and which on the other side engages the inner side of the wheel housing 118. By suitably controlling the pneumatic system associated with the pneumatic bellows 115 and the pneumatic system associated with the spring mechanism at the front wheels 105 it becomes possible to lower the load compartment 106 with the loading floor 107 onto the supporting surface 114, with the cabin 104 and the load compartment 106 jointly moving downwards as a result of the rigid connection between the cabin part 102 and the cargo part 103. Furthermore, a damping element 119 is provided for each wheel suspension 109 for damping the spring caused by the operation of the bellows 115, which damping element is operative between the upper corner 117 of the suspension arm 111 and the wheel housing 120.

One electric motor 121 comprising a stator 122 and a rotor 123 is provided for each wheel suspension 109 for the purpose of driving the rear wheels 110. The electric motor 121 is accommodated in a shell portion 124 which forms an integral part of the suspension arm 111 and which is present at the rear corner 125 thereof. The shell portion 124 partially extends within the rim 126 for the pneumatic tyre 127 of the rear wheel 110. The shell portion 124 is closed by a cover 128 at the side facing towards the load compartment 106. The electric motor 121 is supplied with electric energy from the battery via a cable, which battery is charged by the diesel engine in the cabin part 102.

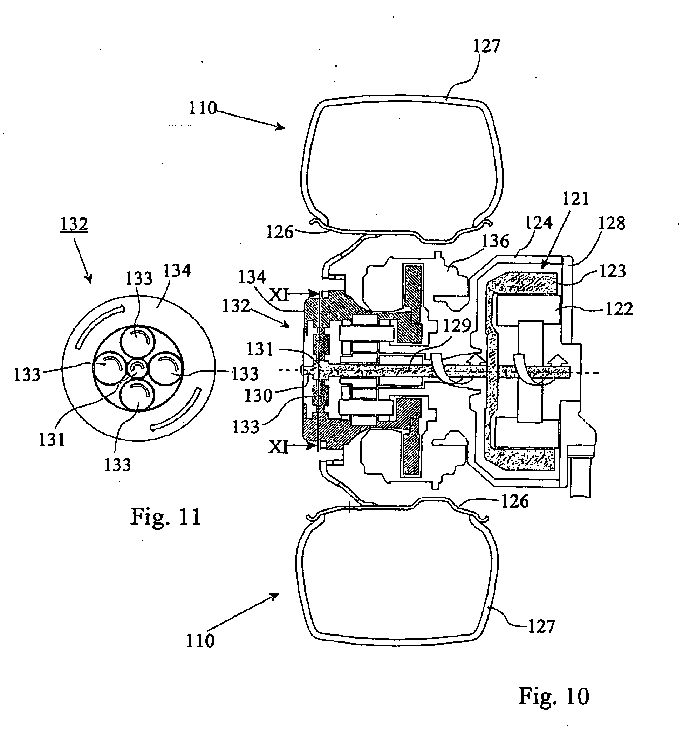

As is shown in Fig. 10, the rotor 123 is rigidly connected to a drive shaft 129 whose central axis coincides with the central axis of the rear wheel 110, an end 130 of which drive shaft is disposed near the outer side of the rear wheel 110. A sun gear 131 forming part of a planetary system 132 (see also Fig. 11) is mounted on the drive shaft 121, close to said end 130. The planetary system 132 furthermore comprises four planet gears 133, which engage the sun gear 131 on the one hand and the internal teeth of the satellite body 134 on the other hand. The satellite body 134 is rigidly connected to the rim 126, in a manner not shown, for rotating the rear wheel 110. Besides the rim 126, also the brake disk 135 is rigidly connected to the satellite body 134. The brake disk 135 may be engaged by the brake caliper 136 when the brake pedal is operated by the driver in the cabin 104, as a result of which the brake caliper 136 is hydraulically actuated.

The wheel suspension comprising an integrated driving unit as described above is very compact and, in addition, obviates the need to provide a mechanical transmission from the diesel engine in the cabin part 102 to the rear wheels for driving the same, which makes it possible to lower the load compartment 106 onto the supporting surface 114.

## Claims

1. A vehicle (101) provided with a wheel suspension (109) comprising a frame (111) which can be mounted to a remaining part (103) of the vehicle, being pivotable with respect thereto against spring pressure generated by spring means (115), a wheel (110) comprising a rim (126), which is rotatable about an axis of rotation with respect to the frame (111), and brake means (135, 136) for braking the rotation of the wheel, the frame (111) comprising a substantially triangular suspension arm (111), which extends on the inner side of the wheel (110), wherein the wheel (110) is rotatably mounted in the rear corner (125) of the arm (111), which arm (111) is connected to the remaining part of the vehicle via pivoting means (113) which are provided for enabling pivoting movement of the arm (111) about a pivot pin which extends through the front corner (112) of the arm (111), parallel to the axis of rotation of the wheel (110), wherein the spring means comprise a pneumatic bellows (115), which on one side acts on a bar (116) which extends through an upper angle (117) of the arm (111), parallel to the axis of rotation of the wheel (110), and on the other side engages the inner side of a wheel housing (118) of the vehicle, wherein the vehicle (101) comprises a load compartment (106) provided with a loading floor (107), which load compartment can be moved upwards and downwards between a lower position and an upper position, at least when the vehicle is stationary, by suitably controlling the spring means (115), in which lower position the loading floor rests on a supporting surface (114) for the vehicle wherein the wheel suspension further comprises driving means for driving the rotation of the wheel and transmission means (132) for transmitting driving power to the wheel, the driving means comprising an individual electric motor (121) for driving the associated wheel.

2. A vehicle according to claim 1, **characterized in that** the frame comprises a cylindrical portion (124) within which the driving means (121) are at least partially accommodated.

3. A vehicle according to claim 2, **characterized in that** the cylindrical portion (124) extends partially within the rim (126).

4. A vehicle according to any one of the preceding claims, **characterized in that** the driving means (121) comprise an outgoing shaft (129) which coincides with the axis of rotation of the wheel (110).

5. A vehicle according to any one of the preceding claims, **characterized in that** the brake means (135, 136) are positioned mainly between the transmission means (132) and the driving means (121).

6. A vehicle according to any one of the preceding claims, **characterized in that** the transmission means (132) comprise a planetary system (132).

7. A vehicle according to any one of the preceding claims, **characterized in that** the brake means (135, 136) are hydraulically actuated.

8. A method for unloading a load compartment (106) provided with a loading floor (107) of a self-propelling vehicle (101) according to either one of the preceding claims, comprising the steps of:
- driving the self-propelling vehicle loaded with cargo to a destination,
- unloading the self-propelling vehicle at said destination,
**characterized by** the step of
- lowering the load compartment (106) from an upper position to a lower position so as to make it possible to unload the self-propelling vehicle, in which lower position the underside of the loading floor (107) of the load compartment is mainly supported on the supporting surface (114) for the wheels of the self-propelling vehicle.

9. A self-propelling vehicle according to any one of the preceding claims 1-7, for use with a method according to claim 8, comprising a chassis with a supporting frame, rear wheels (110) and front wheels, which supporting frame also comprises the chassisless load compartment (106) provided with the loading floor (107), driving means (121) for driving at least some of the wheels, the spring means (115) being operative between the wheels and the supporting frame and adjusting means for adjusting the height of the load compartment, **characterized in that** the distance between the upper side of the loading floor and the underside of the loading floor is maximally 15 cm.

10. A self-propelling vehicle according to claim 9, **characterized in that** the distance between the upper side of the loading floor and the underside of the loading floor is maximally 10 cm.

11. A self-propelling vehicle according to any one of the preceding claims, **characterized in that** the load compartment (106) is provided with an unloading board on the long side of the self-propelling vehicle, which unloading board can pivot about a pivot axis that extends near the loading floor (107), parallel to the direction of movement of the self-propelling vehicle.

12. A self-propelling vehicle according to any one of the preceding claims, **characterized in that** the rear wheels have a divided rear axle.

13. A self-propelling vehicle according to any one of the preceding claims, **characterized in that** the self-propelling vehicle comprises a generator for electrically charging a battery that feeds the electric motors.

14. A self-propelling vehicle according to any one of the claims 9-13, **characterized in that** the adjusting means comprise control means for controlling the operation of the spring mean (115).

15. A self-propelling vehicle according to any one of the preceding claims, **characterized in that** the vehicle comprises a driver's cabin which can be jointly moved up and down with the load compartment under the influence of the operation of the spring means.

16. A self-propelling vehicle according to claim 15, **characterized in that** said load compartment is rigidly connected to the driver's cabin.

## Patentansprüche

1. Fahrzeug (101), das mit einer Radaufhängung (109) versehen ist, die einen Rahmen (111), der an einem übrigen Teil (103) des Fahrzeugs angebracht werden kann und relativ dazu gegen einen Federdruck, der von Federmitteln (115) erzeugt wird, schwenkbar ist, ein Rad (110), das eine Felge (126) umfasst, die um eine Drehachse bezüglich des Rahmens (111) drehbar ist, und Bremsmittel (135, 136) zum Abbremsen der Raddrehung aufweist, wobei der Rahmen (111) einen im Wesentlichen dreischenkligen Aufhängungsarm (111) aufweist, der an der Innenseite des Rads (110) verläuft, wobei das Rad (110) in der hinteren Ecke (125) des Arms (111) drehbar gelagert ist, der mit dem übrigen Teil des Fahrzeugs über Schwenkmittel (113) verbunden ist, die vorgesehen sind, um die Schwenkbewegung des Arms (111) um einen Drehzapfen zu ermöglichen, der parallel zu der Drehachse des Rads (110) durch die vordere Ecke (112) des Arms (111) verläuft, wobei die Federmittel einen pneumatischen Balg (115) aufweisen, der auf einer Seite auf einen Stab (116) wirkt, der parallel zu der Drehachse des Rads (110) durch einen oberen Winkel (117) des Arms (111) verläuft, und auf der anderen Seite an der Innenseite eines Radkastens (118) des Fahrzeugs angreift, wobei das Fahrzeug (101) einen mit einer Ladefläche (107) versehenen Laderaum (106) aufweist, der, zumindest wenn das Fahrzeug steht, zwischen einer unteren Position und einer oberen Position auf- und abwärts bewegt werden kann, indem die Federmittel (115) entsprechend gesteuert werden, wobei in der unteren Position die Ladefläche auf einer Abstützfläche (114) für das Fahrzeug aufliegt, wobei die Radaufhängung ferner Antriebsmittel zum Antreiben der Raddrehung und Übertragungsmittel (132) zur Übertragung der Antriebsleistung auf das Rad aufweist, wobei die Antriebsmittel einen eigenen Elektromotor (121) zum Antreiben des zugehörigen Rads aufweisen.

2. Fahrzeug nach Anspruch 1, **dadurch gekennzeichnet, dass** der Rahmen einen zylindrischen Bereich (124) aufweist, in dem die Antriebsmittel (121) wenigstens teilweise untergebracht sind.

3. Fahrzeug nach Anspruch 2, **dadurch gekennzeichnet, dass** der zylindrische Bereich (124) teilweise innerhalb der Felge (126) verläuft.

4. Fahrzeug nach einem der vorhergehenden Ansprüche, **dadurch gekennzeichnet, dass** die Antriebsmittel (121) eine Ausgangswelle (129) aufweisen, die mit der Drehachse des Rads (110) übereinstimmt.

5. Fahrzeug nach einem der vorhergehenden Ansprüche, **dadurch gekennzeichnet, dass** die Bremsmittel (135, 136) hauptsächlich zwischen den Übertragungsmitteln (132) und den Antriebsmitteln (121) positioniert sind.

6. Fahrzeug nach einem der vorhergehenden Ansprüche, **dadurch gekennzeichnet, dass** die Übertragungsmittel (132) ein Planetensystem (132) aufweisen.

7. Fahrzeug nach einem der vorhergehenden Ansprüche, **dadurch gekennzeichnet, dass** die Bremsmittel (135, 136) hydraulisch betätigt werden.

8. Verfahren zum Entladen eines mit einer Ladefläche (107) versehenen Laderaums (106) eines Fahrzeugs (101) mit Eigenantrieb nach einem der vorhergehenden Ansprüche, das die folgenden Schritte umfasst:
- Fahren des mit Fracht beladenen Fahrzeugs mit Eigenantrieb zu einem Ziel,
- Entladen des Fahrzeugs mit Eigenantrieb an dem Ziel, **gekennzeichnet durch** den Schritt, bei dem
- der Laderaum (106) aus einer oberen Position in eine untere Position abgesenkt wird, um es zu ermöglichen, das Fahrzeug mit Eigenantrieb zu entladen, wobei sich in der unteren Position die Unterseite der Ladefläche (107) des Laderaums hauptsächlich auf der Abstützfläche (114) für die Räder des Fahrzeugs mit Eigenantrieb abstützt.

9. Fahrzeug mit Eigenantrieb nach einem der vorhergehenden Ansprüche 1 bis 7, zur Verwendung mit einem Verfahren nach Anspruch 8, das ein Fahrgestell mit einem tragenden Rahmen, Hinterrädern (110) und Vorderrädern aufweist, wobei der tragende Rahmen auch den selbsttragenden Laderaum (106), der mit der Ladefläche (107) versehen ist, Antriebsmittel (121) zum Antreiben wenigstens einiger der Räder, die Federmittel (115), die zwischen den Rädern und dem tragenden Rahmen wirksam sind, und Verstellmittel zum Verstellen der Höhe des Laderaums aufweist, **dadurch gekennzeichnet, dass** der Abstand zwischen der Oberseite der Ladefläche und der Unterseite der Ladefläche maximal 15 cm beträgt.

10. Fahrzeug mit Eigenantrieb nach Anspruch 9, **dadurch gekennzeichnet, dass** der Abstand zwischen der Oberseite der Ladefläche und der Unterseite der Ladefläche maximal 10 cm beträgt.

11. Fahrzeug mit Eigenantrieb nach einem der vorhergehenden Ansprüche, **dadurch gekennzeichnet, dass** der Laderaum (106) an der Längsseite des Fahrzeugs mit Eigenantrieb mit einer Entladeplatte versehen ist, wobei die Entladeplatte um eine Schwenkachse schwenken kann, die nahe der Ladefläche (107) parallel zu der Bewegungsrichtung des Fahrzeugs mit Eigenantrieb verläuft.

12. Fahrzeug mit Eigenantrieb nach einem der vorhergehenden Ansprüche, **dadurch gekennzeichnet, dass** die Hinterräder eine geteilte Hinterachse haben.

13. Fahrzeug mit Eigenantrieb nach einem der vorhergehenden Ansprüche, **dadurch gekennzeichnet, dass** das Fahrzeug mit Eigenantrieb einen Generator zum elektrischen Laden einer Batterie aufweist, die die Elektromotoren versorgt.

14. Fahrzeug mit Eigenantrieb nach einem der Ansprüche 9 bis 13, **dadurch gekennzeichnet, dass** die Verstellmittel Steuermittel zur Steuerung der Betätigung der Federmittel (115) aufweisen.

15. Fahrzeug mit Eigenantrieb nach einem der vorhergehenden Ansprüche, **dadurch gekennzeichnet, dass** das Fahrzeug eine Fahrerkabine aufweist, die gemeinsam mit dem Laderaum unter dem Einfluss der Betätigung der Federmittel nach oben und nach unten bewegt werden kann.

16. Fahrzeug mit Eigenantrieb nach Anspruch 15, **dadurch gekennzeichnet, dass** der Laderaum starr mit der Fahrerkabine verbunden ist.

## Revendications

1. Véhicule (101) doté d'une suspension de roue (109) comprenant un cadre (111) qui peut être monté sur une partie restante (103) du véhicule, pouvant être pivoté par rapport à ce dernier contre une pression de ressort générée par des moyens de ressort (115), une roue (110) comprenant une jante (126), qui peut être mise en rotation autour d'un axe de rotation par rapport au cadre (111), et des moyens de frein (135, 136) pour freiner la rotation de la roue, le cadre (111) comprenant un bras de suspension (111) sensiblement triangulaire, qui s'étend sur le côté interne de la roue (110), où la roue (110) est montée avec faculté de rotation dans le coin arrière (125) du bras (111), lequel bras (111) est raccordé à la partie restante du véhicule via des moyens de pivotement (113) qui sont fournis pour permettre un mouvement de pivotement du bras (111) autour d'un axe de pivotement qui s'étend à travers le coin avant (112) du bras (111), parallèle à l'axe de rotation de la roue (110), où les moyens de ressort comprennent un soufflet pneumatique (115), qui agit sur un côté d'une barre (116) qui s'étend à travers à un angle supérieur (117) du bras (111), parallèle à l'axe de rotation de la roue (110), et sur l'autre côté met en prise le côté interne d'un logement de roue (118) du véhicule, dans lequel le véhicule (101) comprend un compartiment de charge (106) doté d'un plancher de chargement (107), lequel compartiment de charge peut être déplacé vers le haut et vers le bas entre une position inférieure et une position supérieure, au moins lorsque le véhicule est stationnaire, en commandant de façon adaptée les moyens de ressort (115), dans laquelle position inférieure, le plancher de charge repose sur une surface de support (114) pour le véhicule, dans lequel la suspension de roue comprend en outre des moyens d'entraînement permettant d'entraîner la rotation de la roue et un moyen de transmission (132) permettant de transmettre la puissance d'entraînement à la roue, les moyens d'entraînement comprenant un moteur électrique individuel (121) permettant d'entraîner la roue associée.

2. Véhicule selon la revendication 1, **caractérisé en ce que** le cadre comprend une portion cylindrique (124) à l'intérieur de laquelle les moyens d'entraînement (121) sont au moins partiellement logés.

3. Véhicule selon la revendication 2, **caractérisé en ce que** la portion cylindrique (124) s'étend partiellement à l'intérieur de la jante (126).

4. Véhicule selon l'une quelconque des revendications précédentes, **caractérisé en ce que** les moyens d'entraînement (121) comprennent un arbre sortant (129) qui coïncide avec l'axe de rotation de la roue (110).

5. Véhicule selon l'une quelconque des revendications précédentes, **caractérisé en ce que** les moyens de frein (135, 136) sont positionnés principalement entre les moyens de transmission (132) et les moyens d'entraînement (121).

6. Véhicule selon l'une quelconque des revendications précédentes, **caractérisé en ce que** les moyens de transmission (132) comprennent un système planétaire (132).

7. Véhicule selon l'une quelconque des revendications précédentes, **caractérisé en ce que** les moyens de frein (135, 136) sont actionnés hydrauliquement.

8. Procédé de déchargement d'un compartiment de charge (106) doté d'un plancher de chargement (107) d'un véhicule autopropulsé (101) selon l'une quelconque des revendications précédentes, comprenant les étapes consistant à :
- entraîner le véhicule autopropulsé chargé d'une cargaison vers une destination,
- décharger le véhicule autopropulsé à ladite destination, **caractérisé par** la sous-étape consistant à
- abaisser le compartiment de charge (106) d'une position supérieure vers une position inférieure de façon à rendre possible le déchargement du véhicule autopropulsé, dans laquelle position inférieure le dessous du plancher de chargement (107) du compartiment de charge est principalement supporté sur la surface de support (114) pour les roues du véhicule autopropulsé.

9. Véhicule autopropulsé selon l'une quelconque des revendications précédentes 1 à 7, à utiliser avec un procédé selon la revendication 8, comprenant un châssis avec un cadre de support, des roues arrière (110) et des roues avant, lequel cadre de support comprend en outre le compartiment de charge sans châssis (106) doté du plancher de chargement (107), des moyens d'entraînement (121) permettant d'entraîner au moins certaines des roues, les moyens de ressort (115) étant opérationnels entre les roues et le cadre de support et les moyens d'ajustement pour ajuster la hauteur du compartiment de charge, **caractérisé en ce que** la distance entre le côté supérieur du plancher de chargement et le dessous du plancher de chargement est au maximum de 15 cm.

10. Véhicule autopropulsé selon la revendication 9, **caractérisé en ce que** la distance entre le côté supérieur du plancher de chargement et le dessous du plancher de chargement est au maximum de 10 cm.

11. Véhicule autopropulsé selon l'une quelconque des revendications précédentes, **caractérisé en ce que** le compartiment de charge (106) est doté d'une planche de déchargement sur le côté long du véhicule autopropulsé, laquelle planche de déchargement peut pivoter autour d'un axe de pivotement qui s'étend à côté du plancher de chargement (107), parallèle à la direction de mouvement du véhicule autopropulsé.

12. Véhicule autopropulsé selon l'une quelconque des revendications précédentes, **caractérisé en ce que** les roues arrière ont un essieu arrière divisé.

13. Véhicule autopropulsé selon l'une quelconque des revendications précédentes, **caractérisé en ce que** le véhicule autopropulsé comprend un générateur permettant de charger électriquement une batterie qui alimente les moteurs électriques.

14. Véhicule autopropulsé selon l'une quelconque des revendications 9 à 13, **caractérisé en ce que** les moyens d'ajustement comprennent un moyen de commande permettant de commander le fonctionnement des moyens de ressort (115).

15. Véhicule autopropulsé selon l'une quelconque des revendications précédentes, **caractérisé en ce que** le véhicule comprend une cabine conducteur qui peut être conjointement déplacée vers le haut et vers le bas avec le compartiment de charge sous l'influence du fonctionnement du moyen de ressort.

16. Véhicule autopropulsé selon la revendication 15, **caractérisé en ce que** ledit compartiment de charge est raccordé de façon rigide à la cabine conducteur.
